# DEMANDE DE BREVET EUROPEEN

(11) **EP 1 495 702 A1**
(43) Date de publication de la demande: **12.01.2005**
(21) Numéro de dépôt: 03015776.2
(22) Date de dépôt: 10.07.2003
(51) Int. Cl.: A47J 31/40

(54) **Dispositif pour l'extraction d'une capsule**

(71) Demandeur: NESTEC S.A., 1800 Vevey (CH)
(72) Inventeur: Ryser, Antoine, 1006 Lausanne (CH); Boussemart, Christophe, 74500 Lugrin (FR); Denisart, Jean-Luc, 1086 Cully (CH); Cahen, Antoine, 1005 Lausanne (CH)
(74) Mandataire: Borne, Patrice Daniel

(57) **Abrégé**

L'invention concerne un dispositif pour l'extraction d'une capsule (16) comprenant
- une partie fixe (2),
- une partie mobile (3) relativement à la partie fixe avec un logement pour la capsule et définissant en position de fermeture une position d'extraction de la capsule dans ledit logement,
- une partie d'introduction et de positionnement (6,7) de la capsule arrangée de façon à insérer la capsule par gravité et positionner ladite capsule dans une position intermédiaire,
- un système d'écoulement de boisson (19),
dans lequel la partie mobile déplace la capsule de cette position intermédiaire dans la position d'extraction.

## Description

La présente invention concerne un dispositif pour l'extraction d'une capsule, ainsi que la machine intégrant ledit dispositif.

Il existe déjà sur le marché des dispositifs d'extraction de capsules. Par exemple, la demande de brevet WO 98/47418 concerne un dispositif pour l'extraction de pastilles pré-dosées, dans lequel les pastilles sont introduites verticalement et sont extraites horizontalement. L'inconvénient de ce dispositif est qu'il comprend deux parties mobiles pour l'extraction, ce qui rend le principe mécanique plus compliqué.

Le but de la présente invention est de mettre à disposition du consommateur un système d'extraction de conception plus simple et mécaniquement fiable.

La présente invention concerne un dispositif pour l'extraction d'une capsule comprenant
- une partie fixe,
- une partie mobile relativement à la partie fixe avec un logement pour la capsule et définissant en position de fermeture une position d'extraction de la capsule dans ledit logement,
- une partie d'introduction et de positionnement de la capsule arrangée de façon à insérer la capsule par gravité et positionner ladite capsule dans une position intermédiaire,
- un système d'écoulement de boisson,
dans lequel la partie mobile déplace la capsule de cette position intermédiaire dans la position d'extraction.

Les capsules qu'on peut extraire avec le dispositif selon l'invention sont de tout type, par exemple des capsules ouvertes , du type capsules en papier filtre ou aussi les capsules faisant l'objet des brevets au nom de la demanderesse, à savoir EP 512'148 et EP 602'203. Les capsules peuvent contenir tout type de produit alimentaire soluble ou extractible, par exemple du café rôti et moulu, du café soluble, du cacao soluble, du thé, des substances deshydratées pour bouillons et autres.

En fait , le dispositif selon l'invention permet de faire passer la capsule depuis une position intermédiaire à une position d'extraction : elle est retenue dans sa position intermédiaire, elle passe dans sa position d'extraction et lorsque la partie mobile est ouverte après l'extraction, la capsule est dégagée naturellement sous le simple effet de la gravitation. Elle tombe dans un tiroir ou tout autre moyen de récupération de capsule usagée et le consommateur est prêt pour recharger le dispositif.

Pour passer de la position intermédiaire à la position d'extraction, il existe au moins deux solutions. La première est que la partie mobile dans son mouvement descend la capsule et la pousse selon l'axe de ladite partie mobile dans sa position d'extraction. La seconde possibilité est que la partie mobile pousse simplement la capsule dans son axe de déplacement dans sa position d'extraction.

La partie fixe comporte un corps de guidage sensiblement horizontal pour le mouvement de la partie mobile. Ce corps de guidage est constitué par exemple de 4 rails de guidage. Le dispositif selon l'invention permet une extraction par injection d'eau horizontale. La partie mobile est de préférence sensiblement cylindrique.

Dans le dispositif selon l'invention, la partie d'introduction et de positionnement de la capsule est disposée devant et perpendiculairement au corps de guidage et comprend au moins un moyen de guidage. De préférence, elle comprend deux moyens de guidage. Ces moyens peuvent être de toute sorte, par exemple, dans le cas de l'extraction d'une capsule selon le brevet EP 512'148, il s'agit de glissières d'introduction permettant l'engagement de la collerette de la capsule.

Pour maintenir la capsule en position intermédiaire, dans une première forme de réalisation, les moyens de guidage comprennent au moins un moyen d'arrêt disposée au même niveau de façon à retenir la capsule dans ladite position intermédiaire. De préférence, les moyens de guidage comprennent deux moyens d'arrêt. Ces moyens peuvent être de toute sorte, par exemple des bossages d'arrêt, de hauteur juste suffisante pour bloquer la capsule.

Dans une autre forme de réalisation du dispositif selon l'invention, les moyens de guidage sont pivotants et agencés pour bloquer la capsule en position intermédiaire lorsque la partie mobile est en position d'ouverture et pour débloquer la capsule lorsque la partie mobile est en position de fermeture. Ces moyens de guidage sont actionnés en position de blocage et de déblocage par un levier actionneur, monté à rotation et disposé à l'extérieur de la partie mobile : ce levier , par le déplacement de la partie mobile, met les moyens de guidage en position de blocage ou de déblocage.

Dans une dernière forme de réalisation du dispositif selon l'invention, celui-ci comprend devant le corps de guidage une butée escamotable, disposée sous la partie mobile. Cette butée escamotable est aussi actionnée par le déplacement de la partie mobile: elle permet de maintenir la capsule en position lorsque la partie mobile est en position d'ouverture.

Le dispositif comprend en outre une plaque d'extraction vers laquelle la partie mobile déplace la capsule en position d'extraction. Si on extrait une capsule en papier filtre, cette plaque est une simple plaque percée de trous pour laisser passer le liquide d'extraction. Si la capsule est une capsule selon les deux brevets mentionnés ci-dessus, il s'agit d'une plaque comprenant soit des pyramides ou des pointes comme mentionnés dans les brevets EP 512'142 et EP 604'615.

La partie mobile est mue par des moyens assurant le déplacement en position d'ouverture et de fermeture. Ces moyens ne sont pas critiques. On utilise de préférence des moyens simples sur le plan mécanique, comme des systèmes à transmission par bielles combinées avec un système de blocage de type genouillère. Toute autre solution donnant un mouvement sensiblement linéaire est également possible, par exemple des systèmes hydrauliques, électriques ou mécaniques, par exemple à vis.

Comme déjà mentionné ci-dessus, en fin d'extraction, l'ouverture de la partie mobile permet la chute par gravitation de la capsule.

Le fonctionnement du dispositif dans la première forme de réalisation est le suivant : le consommateur introduit une capsule par la glissière d'introduction. Les moyens d'arrêt bloquent la capsule en position intermédiaire. Le consommateur agit sur les moyens permettant la fermeture de la partie mobile, de sorte que la partie mobile prend la capsule dans son logement et abaisse l'axe de la capsule pour l'amener dans l'axe de déplacement du corps mobile, ce qui a pour effet que la collerette de la capsule passe sur le ou les moyens d'arrêt et se positionne en position d'extraction en dessous de ces moyens d'arrêt. L'extraction a lieu et lorsqu'on ouvre la partie mobile, la capsule tombe par gravitation parce qu'elle n'est plus retenue par les moyens d'arrêt.

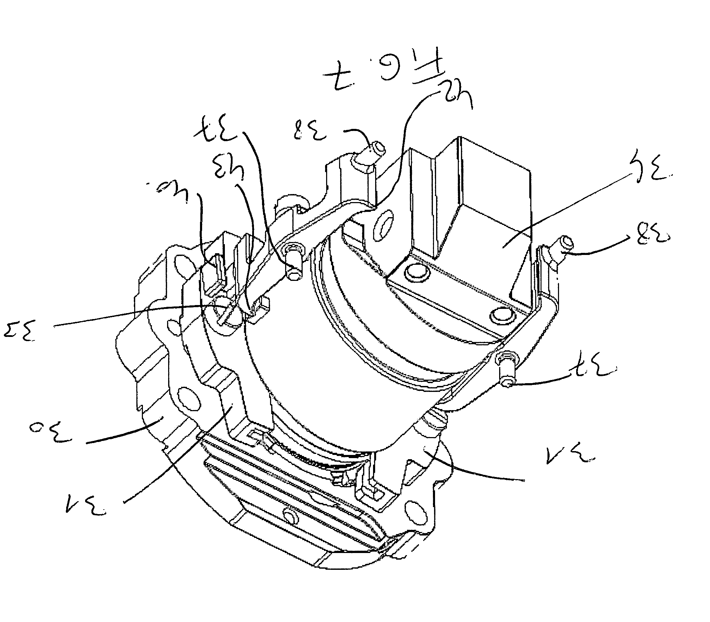

Les figures 7 à 13 ci-dessous montrent le fonctionnement dans les autres modes de réalisation.

Le dispositif selon l'invention est intégré dans une machine à café ou autre système d'extraction comprenant par ailleurs un réservoir d'eau, un conduit d'eau, une pompe pour le déplacement de l'eau, des moyens de chauffage de l'eau et une arrivée d'eau dans la partie mobile et tout autre élément normalement présent dans une machine à café ou autre système d'extraction. Par autre système d'extraction, on entend des systèmes d'extraction multi-boissons, espresso et autres.

La suite de la description est faite en relation avec les dessins , sur lesquels
Fig. 1 est une vue en perspective du dispositif selon l'invention en position ouverte,
Fig. 2 est la même vue que celle de la figure 1, sans le corps de guidage pour mieux comprendre le déplacement de la partie mobile,
Fig. 3 est une vue en perspective du dispositif selon l'invention en position fermée,
Fig. 4 est une vue de côté en position fermée,
Fig. 5 est une vue dans l'axe A de positionnement de la capsule en position intermédiaire et
Fig. 6 est la même vue que celle da la figure 5 avec la capsule en position d'extraction,
Fig. 7 est une vue en perspective selon un second mode de réalisation, partie mobile ouverte,
Fig. 8 est une vue en perspective selon la figure précédente , partie mobile fermée,
Fig. 9 et 10 sont des vues dans l'axe de la plaque d'extraction d'extraction,
Fig. 11 à 13 sont des vues schématique du dispositif selon l'invention dans une dernière forme de réalisation.

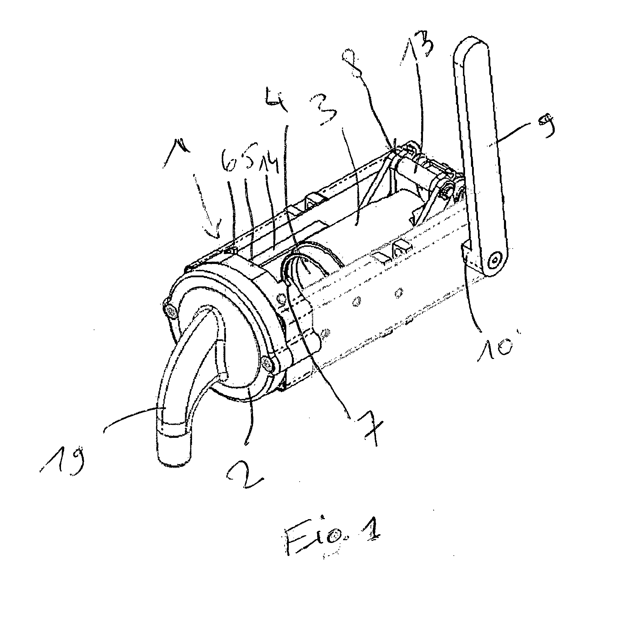

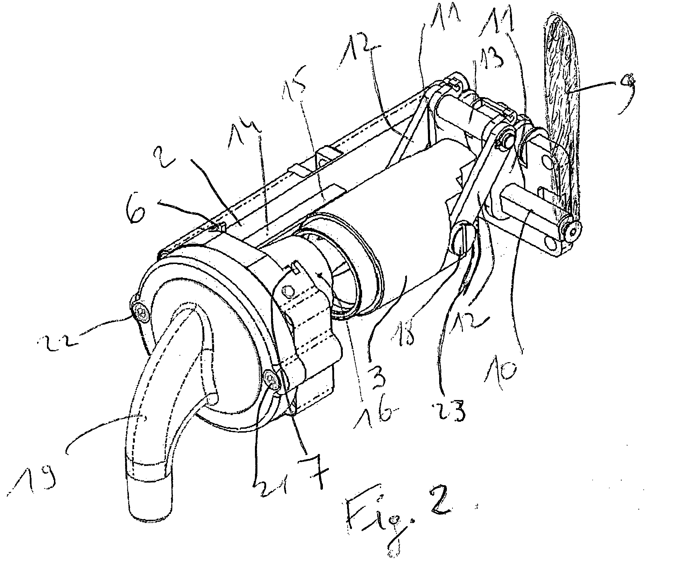

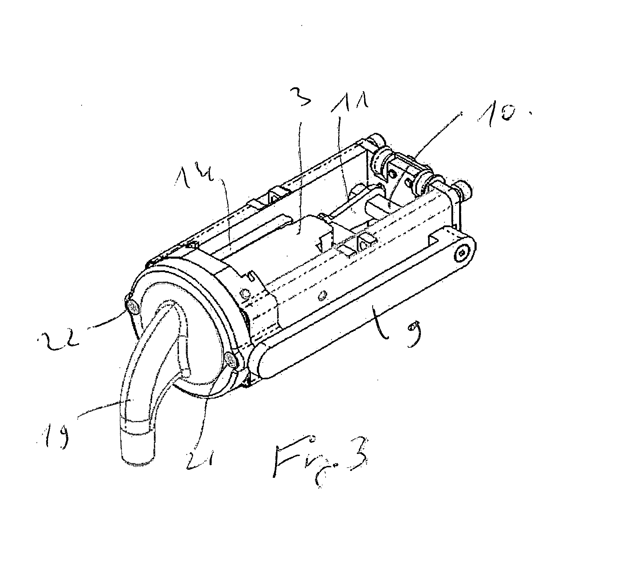

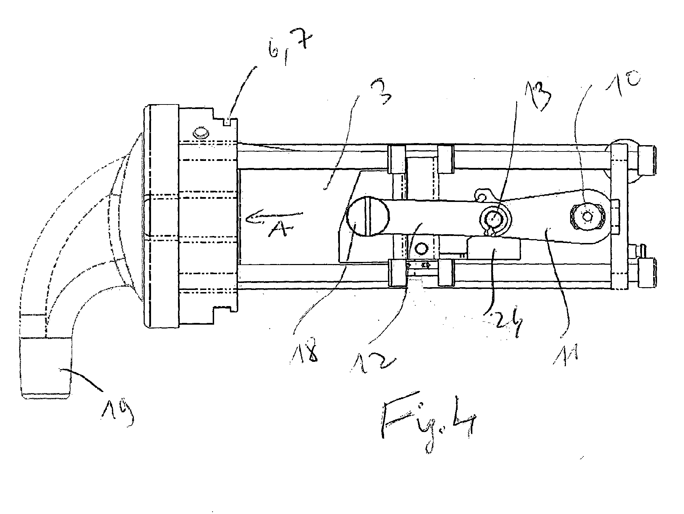

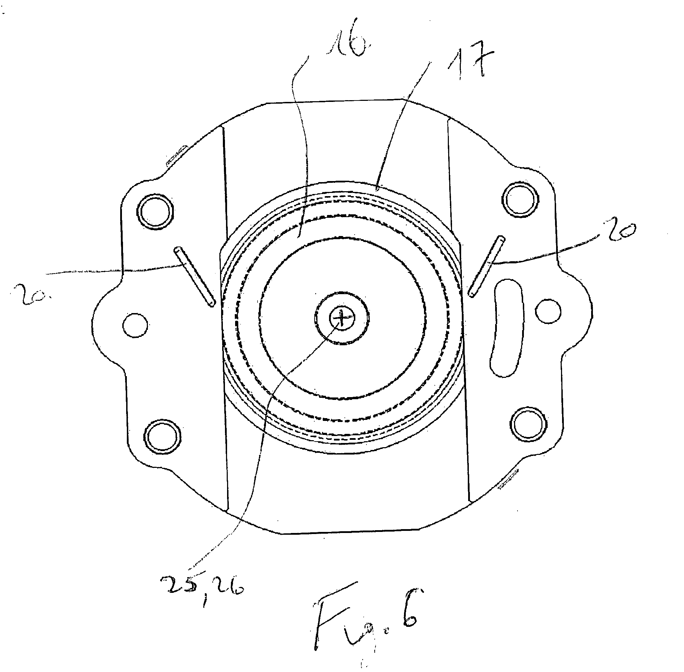

En référence aux figures 1 à 6, le dispositif d'extraction (1) comprend une partie fixe (2) et une partie mobile (3), qui comprend un logement (4) pour la capsule à extraire. La partie d'introduction et de positionnement de la capsule (5) comprend deux moyens de guidage (6,7), dans lesquels coulissent la capsule pour la positionner. La partie mobile (3) est mue par des moyens (8) assurant sa fermeture et son ouverture. Ces moyens sont constitués par un système à genouillère comprenant un bras de levier (9) solidaire d'un arbre d'entrainement (10). Cet arbre est solidaire de deux paires de biellettes respectivement (11) et (12). Le biellettes (11) et (12) sont jointes selon un axe des biellettes (13). Les biellettes (12) sont solidaires par un système de vis (18) du corps mobile (3). Le corps mobile (3) mu par le système à genouillère glisse dans un corps de guidage (14) constitué par 4 rails (15). Lorsqu'on ferme le système à genouillère, l'axe (13) des biellettes est arrêté dans son mouvement par la butée (24). La capsule (16) est prévue pour aller se plaquer contre une plaque d'extraction(17) au moment de l'extraction de ladite capsule. La boisson s'écoule par le système d'écoulement (19) dans une tasse non représentée. Le dispositif selon l'invention comprend finalement dans les moyens de guidage (6,7) deux moyens d'arrêt identiques (20) permettant de maintenir la capsule en position intermédiaire. Les vis (21,22) permettent de solidariser le système d'écoulement de la plaque d'extraction. Il est prévu une arrivée d'eau (23) sur l'arrière du corps mobile.

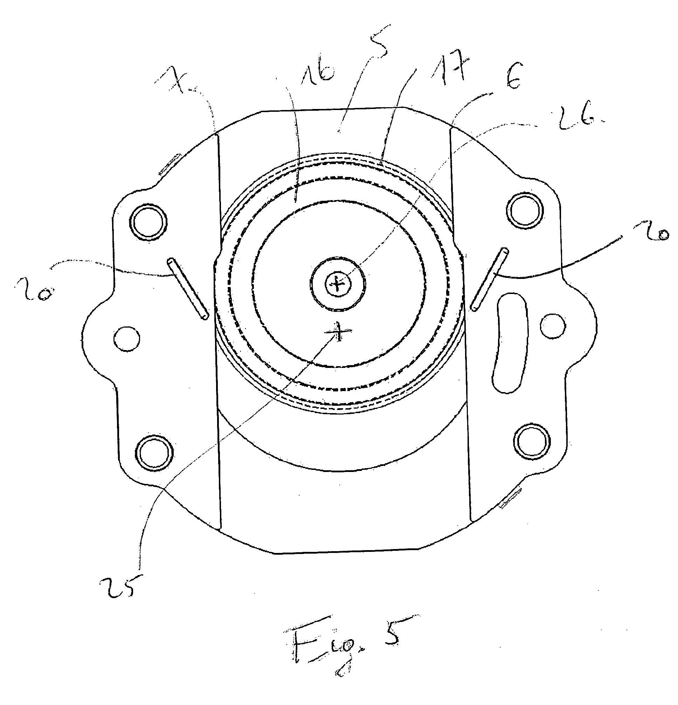

Le dispositif selon l'invention fonctionne de la manière suivante: Le consommateur introduit la capsule (16) par les glissière d'introduction (6,7). La capsule glisse jusqu'à atteindre les moyens d'arrêt (20) : la collerette de la capsule appuie contre ces moyens et la capsule est en position intermédiaire, comme on le voit bien aussi sur la figure 5 : l'axe de la capsule est matérialisé par la référence (26) et l'axe du corps mobile par la référence (25). Le consommateur agit ensuite sur le levier (9) , ce qui déplace par le système à bielles le corps mobile (3). Ce corps mobile se déplace selon son axe (25) : lors de ce mouvement il fait entrer dans son logement (4) la capsule (16), ce qui a pour effet de descendre l'axe (26) de la capsule vers l'axe (25) du corps mobile. La conséquence est que la collerettte de la capsule passe en dessous des moyens d'arrêt (20). Le consommateur donne ensuite ordre pour amener l'eau chaude par le conduit (23) dans le corps mobile : l'eau traverse la capsule, par la montée en pression, la capsule s'ouvre contre la plaque d'extraction et le café coule par la sortie (19) dans une tasse disposée en dessous. Lorsqu'on arrive à la fin de l'extraction, le consommateur soulève le levier (9), ce qui met en mouvement le corps mobile vers l'arrière , libère la capsule qui n'est plus retenue et qui tombe ainsi dans un système de récupération de capsules usagées. Le dispositif est alors prêt pour l'extraction suivante.

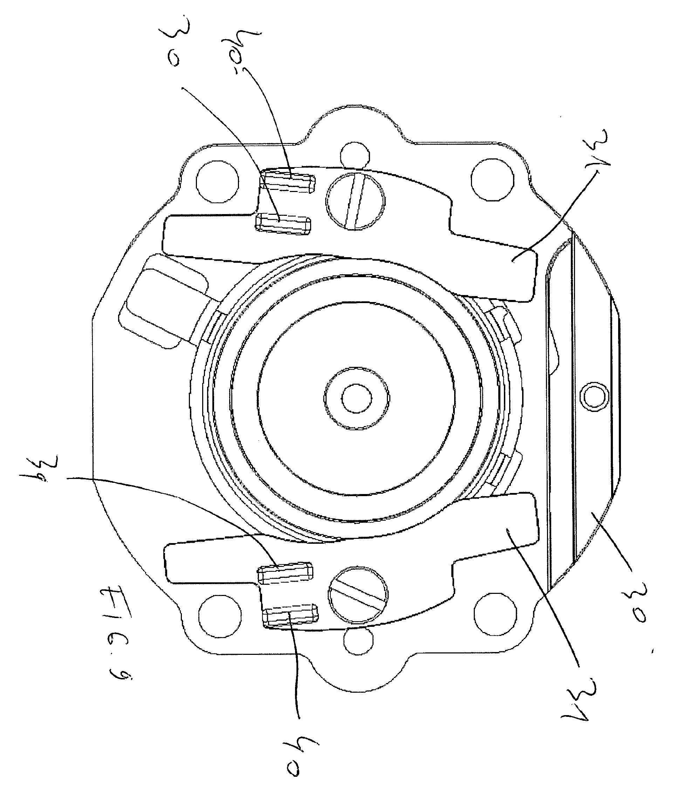

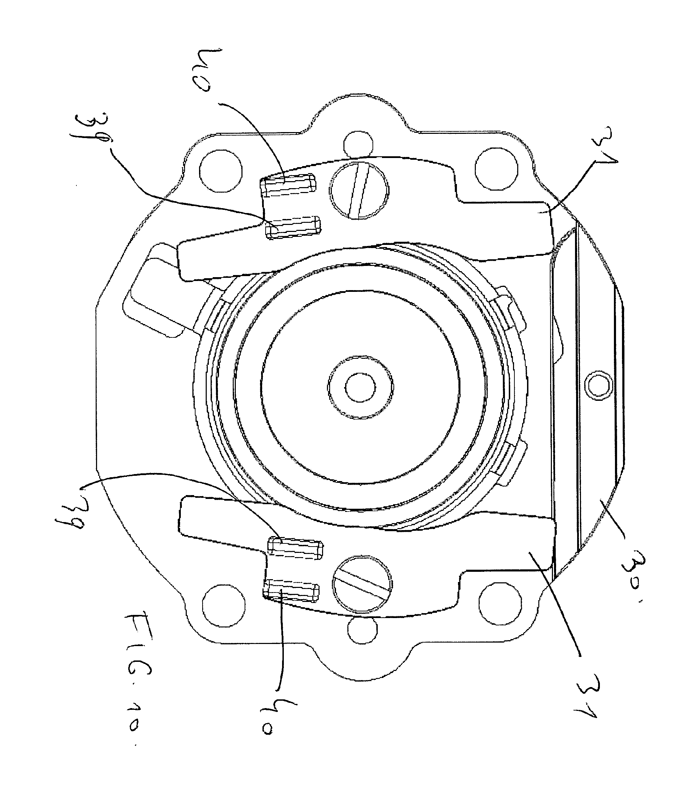

En référence aux figures 7 à 10, le dispositif selon l'invention est plus représenté par rapport aux moyens de guidage et de blocage de la capsule, que par rapport à la partie mobile et aux moyens de mouvement de ladite partie mobile. La plaque d'extraction (30) comprend comme moyen de guidage (31) de la capsule (32) deux éléments pivotants autour d'un axe (33). Chaque élément pivotant comprend deux butées de positionnement, l'une intérieure (39), l'autre extérieure (40), mieux représentés sur les figures 9 et 10. La partie mobile (34) comprend un logement (35) pour la capsule et de chaque côté un bossage (41) . Les moyens pour déplacer la partie mobile ne sont pas représentés. Des deux côtés de la partie mobile, on a disposé un levier actionneur (36), tournant selon l'axe (37) et comportant un doigt de déplacement (38) du moyen de guidage (31) et deux zones d'action avant (42) et arrière (43) dudit levier actionneur (36).

Le fonctionnement est le suivant:

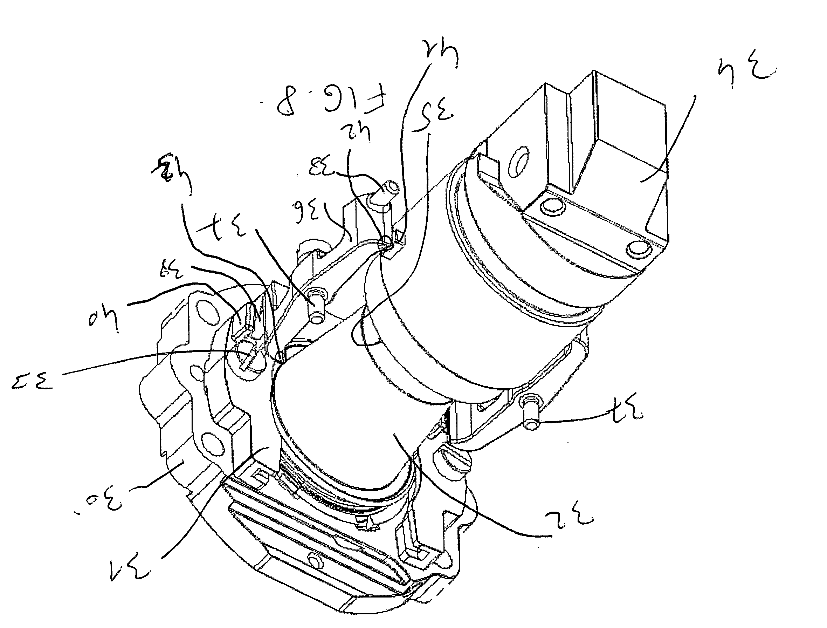

En position ouverte, à savoir selon la figure 8, le doigt de déplacement (38) du levier actionneur (36) maintient le moyen de guidage pivotant (31) en position de retenue de la capsule (32) (figure 10), car ledit doigt agit sur la butée intérieure (39) de l'élément pivotant (31). Lorsque la partie mobile (34) se déplace vers la plaque d'extraction (30), le bossage (41) libére la zone d'action avant (42) et va se positionner vers la zone d'action arrière (43), de sorte que le doigt de déplacement (38) pousse la butée de positionnement extérieure (40) vers l'extérieur. Ce qui a pour conséquence que le moyen de guidage pivotant s'écarte, ce qui signifie qu'au moment de l'ouverture de la partie mobile, la capsule n'aura plus aucune retenue.

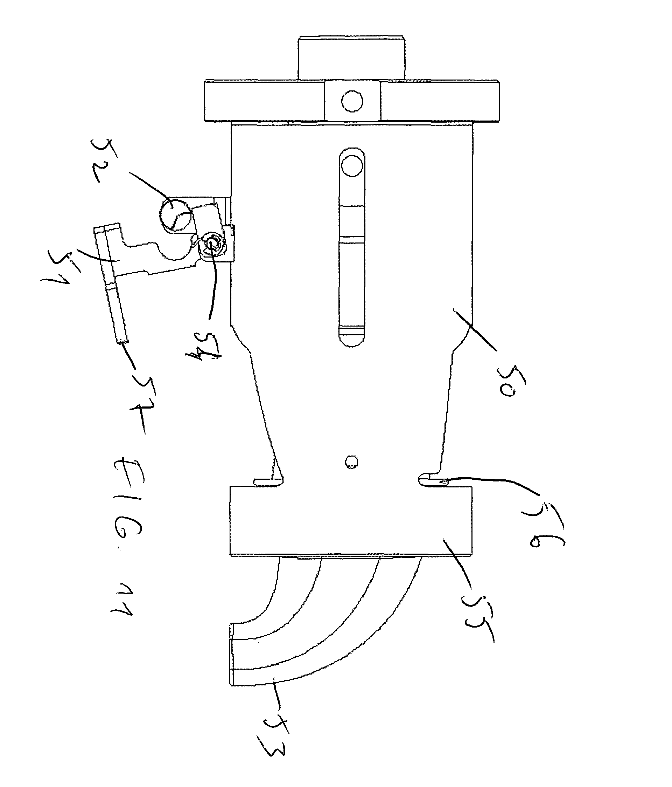

Les figures 11 à 13 donnent un autre mode de réalisation du blocage de la capsule. La partie fixe (50) comprend une plaque d'extraction (55) et un système d'écoulement de boisson (53). Sous l'endroit de positionnement intermédiaire de la capsule (56), on a une butée escamotable (51), à rotation selon l'axe (54). Le doigt (57) permet la retenue de la capsule. Le dispositif comporte finalement, un élément (52) , solidaire de la partie mobile et qui agit ainsi sur la butée escamotable pour l'ouvrir et la fermer.

Le fonctionnement est le suivant:

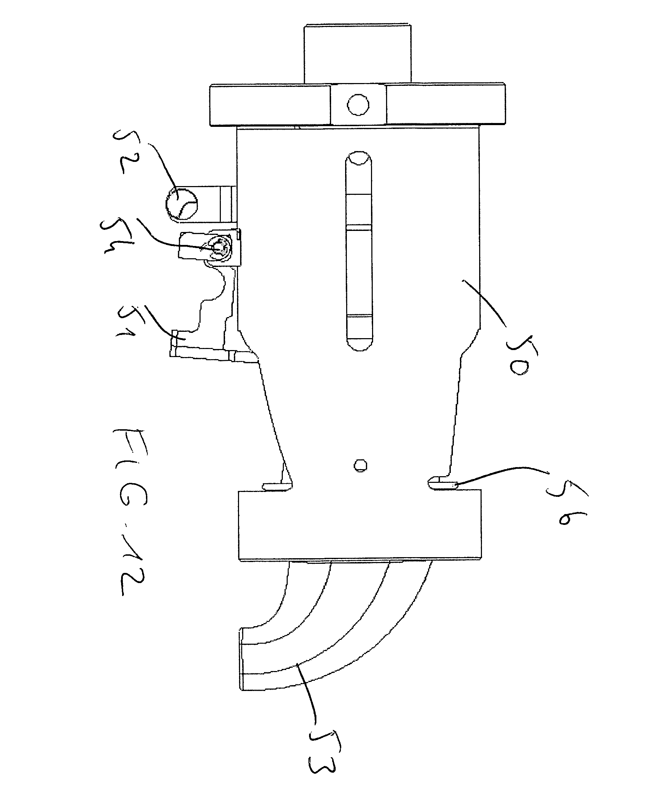

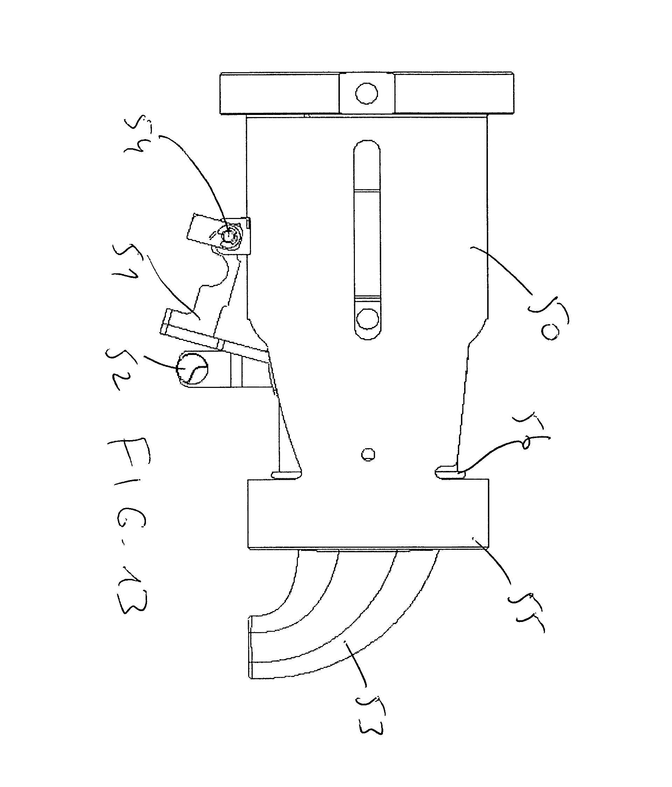

La figure 11 montre lorsque la partie mobile est en mouvement pour s'ouvrir. De sorte que l'élément (52) fait basculer la butée escamotable vers le bas, ce qui libère la capsule. La figure 12 montre la fin de course d'ouverture de la partie mobile, lorsque la butée escamotable est revenue en position de blocage de la capsule (56). Finalement, la figure 13 montre la position de la butée escamotable au moment de l'extraction de ladite capsule (56).

Il est bien entendu que le dispositif selon l'invention est intégré dans une machine à café comprenant tous les éléments permettant l'extraction de capsules, à savoir un réservoir d'eau, une conduite d'amenée d'eau, une pompe pour le déplacement de l'eau, des moyens de chauffage de l'eau et une arrivée d'eau dans la partie mobile.

## Revendications

1. Dispositif pour l'extraction d'une capsule comprenant
- une partie fixe,
- une partie mobile relativement à la partie fixe avec.un logement pour la capsule et définissant en position de fermeture une position d'extraction de la capsule dans ledit logement,
- une partie d'introduction et de positionnement de la capsule arrangée de façon à insérer la capsule par gravité et positionner ladite capsule dans une position intermédiaire,
- un système d'écoulement de boisson,
dans lequel la partie mobile déplace la capsule de cette position intermédiaire dans la position d'extraction.

2. Dispositif selon la revendication 1, **caractérisé en ce que** la partie fixe comporte un corps de guidage sensiblement horizontal pour le mouvement de la partie mobile.

3. Dispositif selon l'une des revendications 1 ou 2, **caractérisé en ce que** la partie d'introduction et de positionnement de la capsule est disposée devant le corps de guidage et comprend deux moyens de guidage.

4. Dispositif selon l'une des revendications 1 à 3, **caractérisé en ce que** les moyens de guidage comprennent deux moyens d'arrêt disposés au même niveau de façon à retenir la capsule dans la position intermédiaire.

5. Dispositif selon l'une des revendications 1 à 3, **caractérisé en ce que** les moyens de guidage sont pivotants et agencés pour bloquer la capsule en position intermédiaire lorsque la partie mobile est en position d'ouverture et pour débloquer la capsule lorsque la partie mobile est en position de fermeture.

6. Dispositif selon l'une des revendications 1 à 3, **caractérisé en ce qu'**il comprend devant le corps de guidage une butée escamotable, disposée sous la partie mobile.

7. Dispositif selon l'une des revendications 1 à 6, **caractérisé en ce qu'**il comprend une plaque d'extraction vers laquelle la partie mobile déplace la capsule en position d'extraction.

8. Dispositif selon l'une des revendications 1 à 7, **caractérisé en ce que** la partie mobile est mue par des moyens assurant le déplacement en position d'ouverture et de fermeture.

9. Dispositif selon la revendication 8, **caractérisé en ce que** le moyens assurant le déplacement sont un système à bielles.

10. Dispositif selon l'une des revendications 1 à 9, **caractérisé en ce que** la réouverture de la partie mobile permet la chute par gravitation de la capsule.

11. Dispositif selon l'une quelconque des revendications 1 à 10, **caractérisé en ce qu'**il est intégré dans une machine à café comprenant par ailleurs un réservoir d'eau, un conduit d'eau, une pompe pour le déplacement de l'eau, des moyens de chauffage de l'eau et une arrivée d'eau dans la partie mobile.
